# EUROPÄISCHE PATENTSCHRIFT

(11) **EP 3 907 023 B1**
(45) Veröffentlichungstag und Bekanntmachung des Hinweises auf die Patenterteilung: **09.10.2024**
(21) Anmeldenummer: 21170907.6
(22) Anmeldetag: 28.04.2021
(51) Int. Cl.: G01N 21/88, B29C 64/153, B22F 10/28, G01N 25/72, G01B 9/02, B29C 64/393, B33Y 50/02, B33Y 30/00, B33Y 10/00, B22F 10/85, B22F 3/115

(54) **VERFAHREN ZUR ERZEUGUNG EINES DEFEKTBEHAFTETEN PROBEBAUTEILS DURCH LASER-STRAHLSCHMELZEN**
METHOD OF PRODUCING A DEFECTIVE SAMPLE COMPONENT USING LASER BEAM MELTING
PROCÉDÉ DE GÉNÉRATION D'UN ÉCHANTILLON DÉFECTUEUX PAR FUSION PAR FAISCEAU LASER

(30) Priorität: 07.05.2020 DE 102020112408
(43) Veröffentlichungstag der Anmeldung: 10.11.2021
(73) Patentinhaber: ArianeGroup GmbH, 82024 Taufkirchen (DE)
(72) Erfinder: PALM, Mathias Sebastian, 81825 München (DE); RISS, Fabian, 83109 Großkarolinenfeld (DE)
(74) Vertreter: Schicker, Silvia

(56) Entgegenhaltungen:
- US-A1- 2013 314 504
- US-A1- 2019 293 550

## Beschreibung

Die Erfindung betrifft ein Verfahren zur Erzeugung eines defektbehafteten Probebauteils durch Laser-Strahlschmelzen.

Beim Laser-Strahlschmelzen, einem generativen Schichtbauverfahren zur Herstellung dreidimensionaler Werkstücke, wird ein Rohstoffpulver schichtweise auf eine in einer Prozesskammer angeordnete Bauplattform aufgetragen und in Abhängigkeit der gewünschten Geometrie des zu erstellenden Werkstücks ortsselektiv von einer Bestrahlungseinrichtung mit Laserstrahlung beaufschlagt. Die in die Pulverschicht eindringende Strahlung bewirkt eine Erwärmung und folglich eine Verschmelzung und/oder Versinterung der Rohstoffpulverpartikel. Die Prozesskammer ist üblicherweise gegenüber der Umgebungsatmosphäre abgedichtet und wird von einem Gasstrom durchströmt, der dazu dient, einerseits eine kontrollierte Schutzgasatmosphäre innerhalb der Prozesskammer aufrechtzuerhalten und andererseits Prozessnebenprodukte, wie zum Beispiel Schweißspratzer, Schweißrauchpartikel oder Rußpartikel aus der Bestrahlungszone zu befördern und möglichst außerhalb des zu erstellenden Werkstücks abzulagern.

In durch Laser-Strahlschmelzen hergestellten Bauteilen können verschiedene Defekte, wie zum Beispiel Poren, Risse oder Bindelagenfehler, d.h. Fehler die aus einer mangelnden Verbindung aufeinander aufgebauter Bauteilschichten resultieren, auftreten. Ursächlich für diese Defekte können beispielsweise eine Abschwächung des Laserstrahls durch Prozessgase, ein geometriebedingter mangelnder Wärmeabfluss durch das Bauteil, eine ungünstige Belichtungsstrategie oder Einflüsse durch das Pulver und die Prozessnebenprodukte sein.

Um den Einfluss potentieller Defekte auf die herzustellenden Bauteile und insbesondere deren mechanische Eigenschaften untersuchen zu können, ist beispielsweise aus Gong H., "Generation and detection of defects in metallic parts fabricated by selective laser melting and electron beam melting and their effects on mechanical properties", 2013 bekannt, durch den Einbau gezielter Fehlstellen im 3D Modell defektbehaftete Ermüdungsproben herzustellen.

US 2013/314504 A1 beschreibt ein Verfahren zur Qualitätsbeurteilung eines mittels eines generativen Lasersinter- und/oder Laserschmelzverfahrens hergestellten

Bauteils für ein Flugzeugtriebwerk. Zuerst wird ein erster Datensatz bereitgestellt, welcher ortsaufgelöste Farbwerte umfasst, die jeweils die Temperatur des Bauteils an einem zugeordneten Bauteilort wahrend des Lasersinterns und/oder Laserschmelzens des Bauteils charakterisieren. Ferner wird ein zweiter Datensatz bereitgestellt, welcher mit dem ersten Datensatz korrespondierende ortsaufgelöste Farbwerte umfasst, die jeweils die Temperatur eines Referenzbauteils an einem zugeordneten Referenzbauteilort wahrend des Lasersinterns und/oder Laserschmelzens des Referenzbauteils charakterisieren. Schließlich wird ein Unterschied zwischen dem ersten Datensatz und dem zweiten Datensatz ermittelt und die Qualität des Bauteils wird anhand des Unterschieds zwischen dem ersten Datensatz und dem zweiten Datensatz ermittelt.

US 2019/293550 A1 beschreibt ein Verfahren zum Abbilden eines dreidimensionalen Bauteils, das mittels eines generativen Fertigungsverfahrens hergestellt wird. Bei dem Verfahren werden wenigstens zwei Schichtbilder des Bauteils während seiner Herstellung mittels einer Detektionseinrichtung ermittelt, welche ausgebildet ist, eine einen Energieeintrag in das Bauteil charakterisierende Messgröße ortaufgelöst zu erfassen. Durch Stapeln der einzelnen Schichtbilder wird ein dreidimensionales Abbild des Bauteils erhalten, das den Energieeintrag an jedem gemessenen Punkt des Bauteils charakterisiert. Durch Anzeigen dieses Abbilds wird schließlich eine Kontrolle und Beurteilung der Fertigungsqualität des Bauteils ermöglicht.

Die Erfindung ist auf die Aufgabe gerichtet, ein Verfahren zur Erzeugung eines defektbehafteten Probebauteils durch Laser-Strahlschmelzen unter Prozessbedingungen anzugeben, die den Prozessbedingungen im realen Fertigungsprozess von Produktionsbauteilen möglichst nahe kommen.

Diese Aufgabe wird durch ein Verfahren mit den Merkmalen des Anspruchs 1 gelöst. Bevorzugte Ausführungsformen des Verfahrens sind in den abhängigen Ansprüchen beschrieben.

Bei einem Verfahren zur Erzeugung eines defektbehafteten Probebauteils durch Laser-Strahlschmelzen wird zunächst in einem ersten Bauprozess ein Analysebauteil durch Laser-Strahlschmelzen erzeugt, indem nacheinander eine Mehrzahl von Rohstoffpulverschichten auf eine Bauplattform aufgetragen und in Abhängigkeit der gewünschten Geometrie des Analysebauteils ortsselektiv mit Laserstrahlung bestrahlt werden. Bei dem Rohstoffpulver kann es sich beispielsweise um ein Pulver oder ein Pulvergemisch aus Metall, einer Metalllegierung, Keramik oder Kunststoff handeln. Ein metallisches Rohstoffpulver weist vorzugsweise Partikelgrößen im Bereich von 15 bis 45 µm auf. Beim Laser-Strahlschmelzen von Kunststoffpulvern werden dagegen in der Regel größere Partikel verarbeitet. Zum Auftragen des Rohstoffpulvers auf die Bauplattform kann beispielsweise eine Pulverauftragsvorrichtung dienen, die parallel zu einer Oberfläche der Bauplattform, d. h. vorzugsweise in horizontaler Richtung über die Oberfläche der Bauplattform hin und her bewegbar ist.

Die ortsselektive Bestrahlung und folglich Verfestigung der Rohstoffpulverschichten kann beispielsweise durch eine geeignete Bestrahlungseinrichtung anhand von CAD Daten des zu erzeugenden Bauteils erfolgen. Die Bestrahlungseinrichtung kann eine beispielsweise in Form eines diodengepumpten Ytterbium-Faserlasers ausgebildete Strahlungsquelle umfassen, die Laserlicht mit einer Wellenlänge von ungefähr 1060 bis 1080 nm und insbesondere z.B. 1064 nm emittiert. Ferner kann die Bestrahlungseinrichtung eine optische Einheit zum Lenken und Verarbeiten des von der Strahlungsquelle emittierten Laserstrahls umfassen, die beispielsweise in Form eines Scanners ausgebildet sein kann.

Die Bauplattform ist vorzugsweise in einer Prozesskammer angeordnet, die gegenüber der Umgebungsatmosphäre abdichtbar ist. Die Bauplattform ist vorzugsweise in vertikaler Richtung verschiebbar, sodass die Bauplattform mit zunehmender Bauhöhe eines schichtweise auf der Bauplattform aufgebauten Bauteils schrittweise in der vertikalen Richtung nach unten in eine Baukammer bewegt werden kann. Nach Beendigung des Bauprozesses ist das hergestellte Bauteil vollständig in der Baukammer aufgenommen und dabei in Rohstoffpulver eingebettet, welches während des Bauprozesses auf die Bauplattform aufgebracht, aber nicht bestrahlt wurde.

Während der Erzeugung des Analysebauteils wird mittels eines Prozessüberwachungssystems mindestens ein Prozessparameter erfasst, der für das Auftreten von Bauteildefekten charakteristisch ist. Die Bauteildefekte können zum Beispiel Poren, Risse oder Bindelagenfehler sein. Anhand des Ergebnisses der Erfassung des Prozessparameters wird ein defektanfälliger Bereich der Bauplattform identifiziert, in dem ein gehäuftes Auftreten von Bauteildefekten zu erwarten ist. Bei dem defektanfälligen Bereich der Bauplattform kann es sich um einen zusammenhängenden Abschnitt oder Bereich der Bauplattform handeln. Es ist jedoch auch denkbar, dass sich der defektanfällige Bereich der Bauplattform aus mehreren separat voneinander ausgebildeten Abschnitten der Bauplattform zusammensetzt.

In einem zweiten Bauprozess wird dann mindestens ein defekt behaftetes Probebauteil durch Laser-Strahlschmelzen erzeugt, indem nacheinander eine Mehrzahl von Rohstoffpulverschichten auf die Bauplattform aufgetragen und zumindest in dem defektanfälligen Bereich der Bauplattform in Abhängigkeit der gewünschten Geometrie des mindestens einen defektbehafteten Probebauteils ortsselektiv mit Laserstrahlung bestrahlt werden. Das mindestens eine defektbehaftete Probebauteil wird also unter Prozessbedingungen, die den Prozessbedingungen im realen Fertigungsprozess von Produktionsbauteilen entsprechen, in dem defektanfälligen Bereich der Bauplattform aufgebaut, sodass eine erhöhte Wahrscheinlichkeit besteht, dass das Probebauteil tatsächlich einen oder mehrere Bauteildefekt(e) aufweist. Dadurch kann darauf verzichtet werden, das Probebauteil "künstlich" mit Defekten zu versehen. Darüber hinaus ist der Prozess der Defektentstehung in dem Probebauteil vergleichbar mit dem Prozess der Defektentstehung in einem Produktionsbauteil.

Durch das hier beschriebene Verfahren kann folglich ein defektbehaftetes Probebauteil erzeugt werden, das optimal mit einem defektbehafteten Produktionsbauteil vergleichbar ist. Untersuchungen der Auswirkungen der Defekte in dem Probebauteil, beispielsweise auf die mechanischen Eigenschaften des Probebauteils sind damit besonders gut auf Produktionsbauteile übertragbar.

In einer bevorzugten Ausführungsform des Verfahrens zur Erzeugung eines defektbehafteten Probebauteils erfasst das Prozessüberwachungssystem den mindestens einen Prozessparameter in Abhängigkeit eines Orts in dem Analysebauteil. Die Erfassung des Prozessparameters erfolgt also in Abhängigkeit eines beispielsweise durch entsprechende Ortskoordinaten definierbaren Orts in dem Analysebauteil in den zu einer Oberfläche der Bauplattform parallelen Ebenen der einzelnen Schichten des Analysebauteils.

Zur Identifikation des defektanfälligen Bereichs der Bauplattform können in Abhängigkeit eines Orts in dem Analysebauteil erfasste Werte des Prozessparameters in eine einer Oberfläche der Bauplattform entsprechende Ebene projiziert werden. Dadurch können beispielsweise kritische Prozessparameterwerte, die auf die Entstehung von Defekten hindeuten und in mehreren übereinanderliegenden Schichten des Analysebauteils gemessen werden, in der der Oberfläche der Bauplattform entsprechenden Ebene kumuliert werden, sodass eine zuverlässige Identifikation des defektanfälligen Bereichs der Bauplattform möglich wird.

Als defektanfälliger Bereich der Bauplattform wird vorzugsweise ein Bereich der Bauplattform identifiziert, wenn bei einer Bestrahlung dieses Bereichs der Bauplattform mit Laserstrahlung der von dem Prozessüberwachungssystem erfasste Prozessparameter einen Sollwert unter- oder überschreitet. Der Sollwert kennzeichnet vorzugsweise einen Wert des Prozessparameters, bei dem eine gute Bauteilqualität, d. h. ein im Wesentlichen defektfreier Bauteilaufbau zu erwarten ist. Grundsätzlich ist es denkbar, alle Abschnitte der Bauplattform, in denen der Prozessparameter den Sollwert unter- oder überschreitet als defektanfälligen Bereich zu identifizieren. Es ist jedoch auch möglich, einen gewissen Toleranzbereich um den Sollwert festzulegen, sodass ein Abschnitt der Bauplattform erst dann dem defektanfälligem Bereich der Bauplattform zugeordnet wird, wenn in diesen Abschnitt der Bauplattform der Prozessparameter den Sollwert um ein bestimmtes durch den Toleranzbereich definiertes Maß unter- oder überschreitet.

Grundsätzlich ist es denkbar, den Sollwert des Prozessparameters, der als Grundlage für die Identifizierung des defektanfälligen Bereichs der Bauplattform genutzt wird, vor der Erzeugung des Analysebauteils festzulegen. Vorzugsweise wird als Sollwert des Prozessparameters jedoch ein Mittelwert des Prozessparameters herangezogen, der sich durch Mittelung der bei der Erzeugung des Analysebauteils mithilfe des Prozessüberwachungssystems erfassten Werte des Prozessparameters ergibt. Bei einem derartigen Vorgehen werden folglich diejenigen Abschnitte der Bauplattform als defektanfälliger Bereich der Bauplattform identifiziert, in denen Abweichungen des Prozessparameters von seinem Mittelwert auftreten.

In einer bevorzugten Ausführungsform des Verfahrens zur Erzeugung eines defektbehafteten Probebauteils werden bei der Erzeugung des Analysebauteils in zumindest einem Teil der Rohstoffpulverschichten mindestens 50 %, insbesondere mindestens 60 %, vorzugsweise mindestens 70 %, insbesondere bevorzugt mindestens 80 % und besonders bevorzugt mindestens 90 % der Fläche der Bauplattform ortsselektiv mit Laserstrahlung bestrahlt. Es wird also vorzugsweise ein Analysebauteil aufgebaut, dessen Querschnittsfläche in zumindest einem Teil seiner Schichten mindestens 50 %, insbesondere mindestens 60 %, vorzugsweise mindestens 70 %, insbesondere bevorzugt mindestens 80 % und besonders bevorzugt mindestens 90 % der Fläche der Bauplattform einnimmt. Falls gewünscht kann auch ein Analysebauteil aufgebaut werden, dessen Form zumindest teilweise an die Form der Bauplattform angepasst ist und in zumindest einem Teil seiner Schichten, vorzugsweise in allen Schichten eine Querschnittsfläche aufweist, die der Oberfläche der Bauplattform entspricht.

Dadurch kann gewährleistet werden, dass bei der Erzeugung des Analysebauteils über einen möglichst großen Bereich der Bauplattform eine Erfassung des für das Auftreten von Bauteilfehlern charakteristischen Prozessparameters erfolgen kann. Der defektanfällige Bereich der Bauplattform kann dann besonders sicher identifiziert werden.

Als der für das Auftreten von Bauteilfehlern charakteristische Prozessparameter wird vorzugsweise ein Prozessparameter erfasst, der für eine Temperatur eines mit Laserstrahlung bestrahlten Bereichs einer Rohstoffpulverschicht charakteristisch ist. Insbesondere kann ein oberhalb eines Sollwerts liegender Wert des Prozessparameters, der anzeigt, dass eine Temperatur eines mit Laserstrahlung bestrahlten Bereichs einer Rohstoffpulverschicht oberhalb einer Solltemperatur liegt, als Indiz dafür gewertet werden, dass der Bereich der Bauplattform, in dem der erhöhte Prozessparameterwert bzw. die erhöhte Temperatur erfasst wird, als defektanfälliger Bereich der Bauplattform einzustufen ist. Ein erhöhter Prozessparameterwert bzw. eine erhöhte Temperatur kann in einem Bereich der Bauplattform beispielsweise dann auftreten, wenn in diesem Bereich der Bauplattform eine Störung des Gasstroms auftritt, der dazu dient, einerseits eine kontrollierte Schutzgasatmosphäre innerhalb der Prozesskammer aufrechtzuerhalten und andererseits Prozessnebenprodukte, wie zum Beispiel Schweißspratzer, Schweißrauchpartikel oder Rußpartikel aus der Bestrahlungszone zu befördern und möglichst außerhalb des zu erstellenden Werkstücks abzulagern.

Ein Bereich der Bauplattform, in dem ein erhöhter Prozessparameterwert bzw. eine erhöhte Temperatur auftritt und der daher als defektanfälliger Bereich der Bauplattform einzustufen ist, ist daher häufig auch ein Bereich der Bauplattform, in dem eine verringerte Strömungsgeschwindigkeit des die Prozesskammer durchströmenden Gasstroms vorliegt. Eine Verringerung der Strömungsgeschwindigkeit des die Prozesskammer durchströmenden Gasstroms wird häufig beispielsweise im Bereich eines Gasauslasses der Prozesskammer beobachtet. Als defektanfälliger Bereich der Bauplattform wird in diesem Fall dann beispielsweise ein zu dem Gasauslass der Prozesskammer benachbarter Bereich der Bauplattform identifiziert.

Die Erfassung des für eine Temperatur eines mit Laserstrahlung bestrahlten Bereichs einer Rohstoffpulverschicht charakteristischen Prozessparameters erfolgt vorzugsweise anhand der Erfassung einer Emission von Infrarotstrahlung in dem mit Laserstrahlung bestrahlten Bereich der Rohstoffpulverschicht. Insbesondere kann eine Emission von Strahlung und insbesondere eine Strahlungsintensität im nahen Infrarotbereich erfasst und als der für eine Temperatur in dem mit Laserstrahlung bestrahlten Bereich der Rohstoffpulverschicht charakteristische Prozessparameter herangezogen werden. Die Erfassung der Infrarotstrahlung kann beispielsweise mithilfe einer hochauflösenden Kamera erfolgen.

Als Prozessüberwachungssystem zur Erfassung des für das Auftreten von Bauteilfehlern charakteristischen Prozessparameters kann beispielsweise ein optisches Tomografiesystem zum Einsatz kommen. Das optische Tomografiesystem kann in einem mit Laserstrahlung bestrahlten Bereich einer Rohstoffpulverschicht mithilfe einer hochauflösenden Kamera die Emission von Strahlung und insbesondere die Strahlungsintensität im nahen Infrarotbereich erfassen und daraus Rückschlüsse auf die Temperatur in dem mit Laserstrahlung bestrahlten Bereich der Rohstoffpulverschicht ziehen. Anschließend können die erfassten Strahlungsintensitäts- und/oder Temperaturwerte in eine einer Oberfläche der Bauplattform entsprechende Ebene projiziert werden. Ferner kann eine grafische Darstellung erzeugt werden, in der erhöhte Strahlungsintensitäts- und/oder Temperaturwerte farblich gekennzeichnet werden, sodass in der grafischen Darstellung ein Bereich der Bauplattform, in dem erhöhte Strahlungsintensitäten und/oder Temperaturen gemessen wurden, farblich gekennzeichnet ist und folglich auf einfache Art und Weise als defektanfälliger Bereich der Bauplattform identifiziert werden kann.

In einer Variante des Verfahrens zur Erzeugung eines defektbehafteten Probebauteils werden bei der Erzeugung des Probebauteils in dem defektanfälligen Bereich der Bauplattform in zumindest einem Teil der Rohstoffpulverschichten mindestens 50 %, insbesondere mindestens 60 %, vorzugsweise mindestens 70 %, insbesondere bevorzugt mindestens 80 % und besonders bevorzugt mindestens 90 % der Fläche eines außerhalb des defektanfälligen Bereichs der Bauplattform liegenden Bereichs der Bauplattform ortsselektiv mit Laserstrahlung bestrahlt. Beim Aufbau des mindestens einen defektbehafteten Probebauteils wird also vorzugsweise nicht nur der defektanfällige Bereich der Bauplattform ortsselektiv mit Laserstrahlung bestrahlt, sondern auch ein signifikanter Anteil der Fläche des außerhalb des defektanfälligen Bereichs der Bauplattform liegenden Bereichs der Bauplattform. Falls gewünscht kann beim Aufbau des mindestens einen defektbehafteten Probebauteils in zumindest einem Teil der Rohstoffpulverschichten, vorzugsweise in allen Schichten eine zumindest annähernd der Oberfläche der Bauplattform entsprechende Gesamtfläche bestrahlt werden.

Dadurch kann sichergestellt werden, dass beim Aufbau des mindestens einen defektbehafteten Probebauteils ausreichend Schweißspratzer, Schweißrauchpartikel und Rußpartikel entstehen, die die gewünschten Defekte in dem Probebauteil verursachen. Darüber hinaus wird die Wahrscheinlichkeit erhöht, dass von dem die Prozesskammer durchströmenden Gasstrom aus der unmittelbaren Bestrahlungszone abgeführte Verunreinigungen auf einem Bereich des Bauteils anstatt außerhalb des Bauteils abgelagert werden. Dadurch können die beim Aufbau von großen Bauteilen herrschenden Prozessbedingungen besonders realitätsnah simuliert werden.

Aus dem mindestens einen durch Laser-Strahlschmelzen hergestellten defektbehafteten Probebauteil kann durch spanende Fertigung ein endgültiges Probebauteil erzeugt werden. Beispielsweise kann das durch Laser-Strahlschmelzen hergestellte defektbehaftete Probebauteil durch Fräsen oder Schleifen in seine endgültige gewünschte Form gebracht werden.

Alternativ dazu ist es jedoch auch denkbar, dass das mindestens eine defektbehaftete Probebauteil in Form eines Endkonturprobebauteils erzeugt wird. Auf ein zusätzliches Formgebungsverfahren zur Erzeugung der Endkontur des defektbehafteten Probebauteils kann dann verzichtet werden. Vorzugsweise kann dann auch auf eine Oberflächennachbearbeitung des defektbehafteten Probebauteils verzichtet werden.

In dem defektanfälligen Bereich der Bauplattform können auch eine Mehrzahl von defektbehafteten Probebauteilen erzeugt werden. Die defektbehafteten Probebauteile sind dann vorzugsweise durch einen Spalt voneinander getrennt, sodass die defektbehafteten Probebauteile anschließend einfach voneinander separiert werden können.

Der Spalt zwischen zueinander benachbarten defektbehafteten Probebauteilen kann eine Breite von ca. 0,15 mm bis ca. 0,35 mm, insbesondere eine Breite von ca. 0,2 mm bis ca. 0,3 mm und vorzugsweise eine Breite von ca. 0,25 mm haben.

Im Folgenden wird die Erfindung unter Bezugnahme auf die beigefügten schematischen Figuren näher beschrieben, wobei:
- Figur 1: eine schematische Darstellung einer Bauplattform zur Erzeugung eines Bauteils durch Laser-Strahlschmelzen zeigt;
- Figur 2: eine grafische Darstellung zeigt, die durch eine Projektion von mittels eines Prozessüberwachungssystems während der Erzeugung eines Analysebauteils erfassten Prozessparameterwerten in eine einer Oberfläche der Bauplattform entsprechende Ebene erhalten wird; und
- Figur 3: eine Mehrzahl von nach dem erfindungsgemäßen Verfahren hergestellten Probebauteilen zeigt.

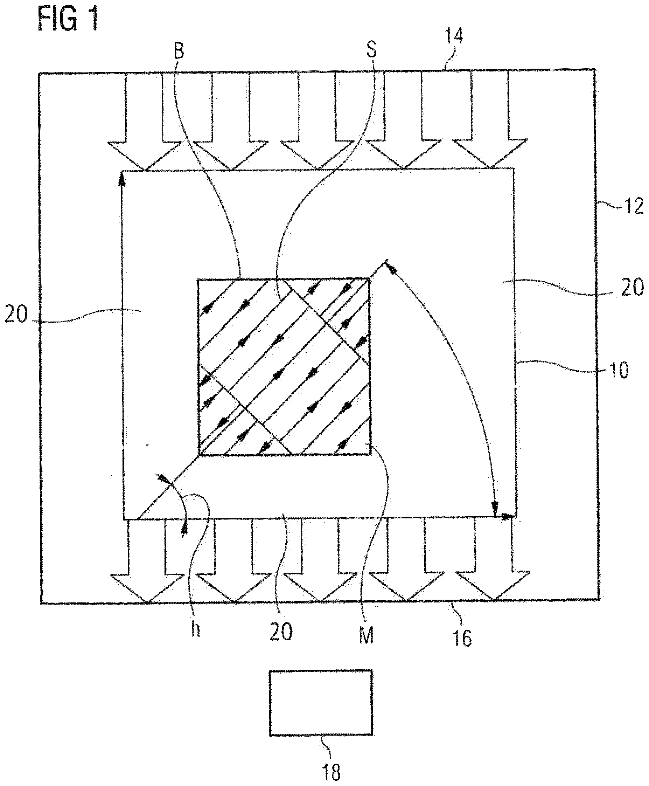

Figur 1 zeigt eine Draufsicht einer Bauplattform 10, wie sie üblicherweise in einer Maschine zum Herstellen von Bauteilen durch Laser-Strahlschmelzen zum Einsatz kommt. Die Bauplattform 10 ist in einer Prozesskammer 12 angeordnet, die gegenüber der Umgebungsatmosphäre abdichtbar ist. Über einen Gaseinlass 14 wird der Prozesskammer 12 ein Inertgas, beispielsweise Argon oder dergleichen, zugeführt. Das über den Gaseinlass 14 in die Prozesskammer 12 geleitete Inertgas überströmt die Bauplattform 10 in einer Richtung, die in der Figur 1 durch die Pfeile angedeutet ist. Über einen Gasauslass 16 wird das Inertgas wieder aus der Prozesskammer 12 abgeführt.

Auf die Bauplattform 10 wird mittels einer in Figur 1 nicht gezeigten Pulverauftragsvorrichtung, die parallel zu einer Oberfläche der Bauplattform 10 in horizontaler Richtung über die Oberfläche der Bauplattform 10 hin und her bewegbar ist, Schicht für Schicht ein Rohstoffpulver aufgetragen. Bei dem Rohstoffpulver kann es sich beispielsweise um ein Pulver oder ein Pulvergemisch aus Metall, einer Metalllegierung, Keramik oder Kunststoff handeln, wobei das Rohstoffpulver üblicherweise Partikelgrößen im Bereich <100 µm aufweist. Die Rohstoffpulverschichten werden mittels einer in Figur 1 ebenfalls nicht gezeigten Bestrahlungseinrichtung, die eine in Form einer Laserstrahlungsquelle ausgebildete Strahlungsquelle sowie einen Scanner zum Lenken und Verarbeiten des von der Strahlungsquelle emittierten Laserstrahls umfasst, ortsselektiv mit Laserstrahlung beaufschlagt.

Die in die Rohstoffpulverschicht eindringende Strahlung bewirkt eine Erwärmung und folglich eine Verschmelzung und/oder Versinterung der Rohstoffpulverpartikel. Die ortsselektive Bestrahlung und folglich Verfestigung der Rohstoffpulverschichten kann beispielsweise anhand von CAD Daten eines zu erzeugenden Bauteils B erfolgen. Die Bauplattform 10 ist in vertikaler Richtung verschiebbar, sodass die Bauplattform mit zunehmender Bauhöhe des schichtweise auf der Bauplattform 10 aufgebauten Bauteils B schrittweise in der vertikalen Richtung nach unten in eine ebenfalls nicht gezeigte Baukammer bewegt werden kann. Nach Beendigung des Bauprozesses ist das Bauteil B vollständig in der Baukammer 10 aufgenommen und dabei in Rohstoffpulver eingebettet, welches während des Bauprozesses auf die Bauplattform 10 aufgebracht, aber nicht bestrahlt wurde.

Die Bestrahlung der Rohstoffpulverschichten erfolgt üblicherweise nach einem vorgegebenen Bestrahlungsmuster. Beispielsweise folgt die Bewegung des Laserstrahls über die Rohstoffpulverschichten Scanvektoren S, wobei die Scanvektoren S, wie in Figur 1 gezeigt, ein Streifenmuster mit einer Mehrzahl von zueinander benachbarten Streifen M definieren können. In einem Streifen M des Streifenmusters sind zueinander benachbarte Scanvektoren S beispielsweise entgegengesetzt zueinander ausgerichtet. Ein Hatch-Winkel h, der durch einen Scanvektor S und eine x-Achse eines in einer Ebene der Oberfläche der Bauplattform 10 definierten Koordinatensystems bestimmt wird, beträgt in der Darstellung gemäß Figur 1 ca. 45°. Figur 1 veranschaulicht jedoch lediglich ein Beispiel eines denkbaren Bestrahlungsmusters.

Der durch die Prozesskammer 12 geleitete Gasstrom dient einerseits dazu, eine kontrollierte Schutzgasatmosphäre innerhalb der Prozesskammer 12 aufrechtzuerhalten. Andererseits werden durch den Gasstrom Prozessnebenprodukte, wie zum Beispiel Schweißspratzer, Schweißrauchpartikel oder Rußpartikel aus der Bestrahlungszone befördert und möglichst außerhalb des zu erstellenden Bauteils B abgelagert. Der Abtransport von Verunreinigungen aus der Bestrahlungszone wird erleichtert, wenn die Bestrahlungsrichtung, d. h. die Ausrichtung der Scanvektoren S und die Gasströmungsrichtung unterschiedlich sind. Ferner ist für einen zuverlässigen Abtransport von Verunreinigungen aus der Bestrahlungszone eine bestimmte Strömungsgeschwindigkeit des durch die Prozesskammer 12 geleiteten Gasstroms erforderlich. Ein gestörter Gasstrom und insbesondere eine verringerte Strömungsgeschwindigkeit des durch die Prozesskammer 12 geleiteten Gasstroms kann zur Folge haben, dass bei der Bestrahlung des Rohstoffpulvers entstehende Verunreinigungen, wie z.B. Schweißspratzer, Schweißrauchpartikel oder Rußpartikel nicht wie gewünscht aus der Bestrahlungszone befördert werden können. Dies kann zu einer unerwünschten Abschwächung des Laserstrahls führen. Ferner kann eine zu geringe Gasströmungsgeschwindigkeit dazu führen, dass Verunreinigungspartikel nicht außerhalb des aufzubauenden Bauteils, sondern auf dem Bauteil B abgelagert werden. Nicht wie gewünscht abtransportierte Partikel werden beim Auftragen der nächsten Rohstoffpulverschicht mit Rohstoffpulver bedeckt und gemeinsam mit dem Rohstoffpulver aufgeschmolzen. Diese Effekte können zur Entstehung von Defekten, wie zum Beispiel Poren, Rissen oder Bindelagenfehler in dem durch Laser-Strahlschmelzen hergestellten Bauteil führen.

Um den Einfluss von Defekten auf die Eigenschaften und insbesondere die mechanischen Eigenschaften von durch Laser-Strahlschmelzen hergestellten Bauteilen untersuchen zu können, müssen defektbehaftete Probebauteile erzeugt werden. Die Erzeugung eines defektbehafteten Probebauteils unter Prozessbedingungen, die den Prozessbedingungen im realen Fertigungsprozess von Produktionsbauteilen möglichst nahe kommen, ist mit dem nachfolgend beschriebenen Verfahren möglich.

Bei dem hier beschriebenen Verfahren zur Erzeugung eines defektbehafteten Probebauteils durch Laser-Strahlschmelzen wird zunächst in einem ersten Bauprozess ein Analysebauteil durch Laser-Strahlschmelzen erzeugt, indem nacheinander eine Mehrzahl von Rohstoffpulverschichten auf die Bauplattform 10 aufgetragen und in Abhängigkeit der gewünschten Geometrie des Analysebauteils ortsselektiv mit Laserstrahlung bestrahlt werden.

Insbesondere werden bei der Erzeugung des Analysebauteils in zumindest einem Teil der Rohstoffpulverschichten mindestens 50 %, insbesondere mindestens 60 %, vorzugsweise mindestens 70 %, insbesondere bevorzugt mindestens 80 % und besonders bevorzugt mindestens 90 % der Fläche der Bauplattform 10 ortsselektiv mit Laserstrahlung bestrahlt. Eine Querschnittsfläche des Analysebauteils nimmt folglich in zumindest einem Teil seiner Schichten mindestens 50 %, insbesondere mindestens 60 %, vorzugsweise mindestens 70 %, insbesondere bevorzugt mindestens 80 % und besonders bevorzugt mindestens 90 % der Fläche der Bauplattform 10 ein. Vorzugsweise wird ein Analysebauteil aufgebaut, dessen Form an die Form der Bauplattform 10 angepasst ist und in allen Schichten eine Querschnittsfläche aufweist, die der Oberfläche der Bauplattform 10 entspricht.

Während der Erzeugung des Analysebauteils wird mittels eines Prozessüberwachungssystems 18, das hier in Form eines optischen Tomografiesystems ausgebildet ist, mindestens ein Prozessparameter erfasst, der für das Auftreten von Bauteildefekten charakteristisch ist. Insbesondere erfasst das Prozessüberwachungssystem 18 den mindestens einen Prozessparameter in Abhängigkeit eines Orts in dem Analysebauteil, der durch entsprechende Ortskoordinaten in den zu der Oberfläche der Bauplattform 10 parallelen Ebenen der einzelnen Schichten des Analysebauteils definiert ist.

Anhand des Ergebnisses der Erfassung des Prozessparameters wird ein defektanfälliger Bereich 20 der Bauplattform 10 identifiziert, in dem ein gehäuftes Auftreten von Bauteildefekten zu erwarten ist. Bei der in der Figur 1 veranschaulichten Bauplattform 10 liegt der defektanfällige Bereich 20 der Bauplattform 10 benachbart zu dem Gasauslass 16 sowie in Seitenbereichen der Bauplattform 10 in einer dem Gaseinlass 14 zugewandten Hälfte der Bauplattform 10. Bei dem hier gezeigten Ausführungsbeispiel umfasst der defektanfällige Bereich 20 der Bauplattform 10 mehrere separat voneinander ausgebildete Abschnitte. Der defektanfällige Bereich 20 der Bauplattform 10 kann jedoch auch durch einen einzigen zusammenhängenden Abschnitt der Bauplattform 10 gebildet werden.

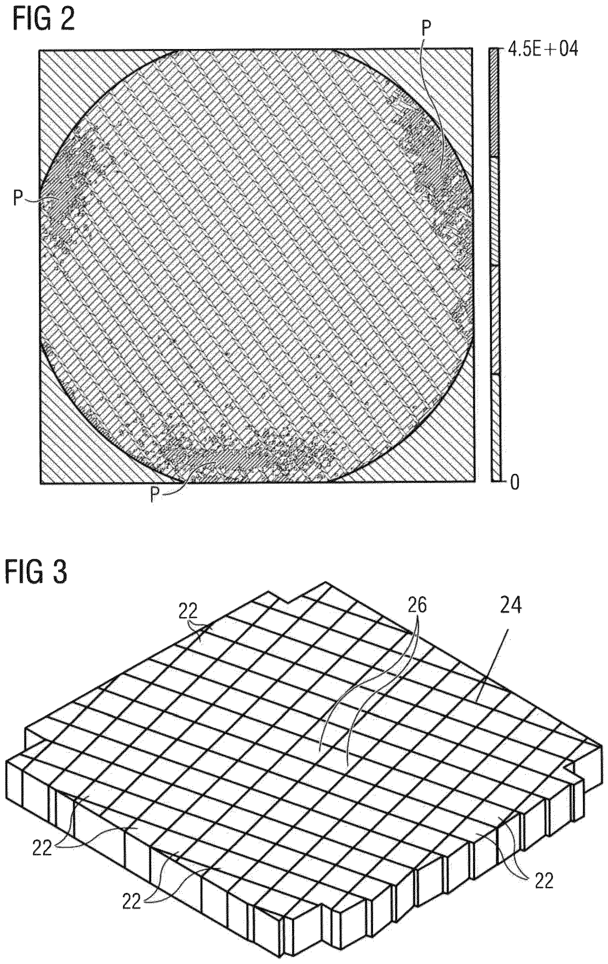

Zur Identifikation des defektanfälligen Bereichs 20 der Bauplattform 10 werden die in Abhängigkeit eines Orts in dem Analysebauteil erfasste Werte des Prozessparameters in eine einer Oberfläche der Bauplattform 10 entsprechende Ebene projiziert. Eine entsprechende grafische Darstellung, die eine derartige Projektion von mittels eines Prozessüberwachungssystems 18 während der Erzeugung des Analysebauteils erfassten Prozessparameterwerten in eine einer Oberfläche der Bauplattform 10 entsprechende Ebene zeigt, ist in Figur 2 veranschaulicht. In dieser Darstellung können kritische Prozessparameterwerte, die auf die Entstehung von Defekten hindeuten und in mehreren übereinanderliegenden Schichten des Analysebauteils gemessen werden in der der Oberfläche der Bauplattform 10 entsprechenden Ebene kumuliert werden.

In der von dem Prozessüberwachungssystem 18 ausgegebenen Darstellung gemäß Figur 2 sind die kritischen Prozessparameterwerte durch die Punkte P veranschaulicht, die benachbart zu dem Gasauslass 16 sowie in Seitenbereichen der Bauplattform 10 in einer dem Gaseinlass 14 zugewandten Hälfte der Bauplattform 10 gehäuft auftreten und dadurch diese Abschnitte der Bauplattform als defektanfälligen Bereich 20 der Bauplattform 10 identifizieren. Es versteht sich, dass die grafische Darstellung gemäß Figur 2 auch farbig ausgegeben werden kann, sodass kritische Prozessparameterwerte in einer einfach erkennbaren Signalfarbe, wie z.B. rot dargestellt werden können. Dadurch wird eine besonders einfache und zuverlässige Identifikation des defektanfälligen Bereichs 20 der Bauplattform 10 möglich

In der Darstellung gemäß Figur 2 werden die gemessenen Prozessparameterwerte dann als kritische Prozessparameterwerte beispielsweise in einer entsprechenden Farbe dargestellt, wenn der von dem Prozessüberwachungssystem 18 erfasste Prozessparameter einen Sollwert unter- oder überschreitet. Als Sollwert des Prozessparameters wird dabei ein Mittelwert des Prozessparameters herangezogen, der sich durch Mittelung der bei der Erzeugung des Analysebauteils mithilfe des Prozessüberwachungssystems 18 erfassten Werte des Prozessparameters ergibt. Die in der Darstellung gemäß Figur 2 veranschaulichten Punkte P zeigen folglich an, in welchen Bereichen der Bauplattform 10 Abweichungen des Prozessparameters von seinem Mittelwert besonders gehäuft auftreten. Folglich wird als defektanfälliger Bereich 20 der Bauplattform 10 ein Bereich der Bauplattform 10 identifiziert, wenn bei einer Bestrahlung dieses Bereichs der Bauplattform 10 mit Laserstrahlung der von dem Prozessüberwachungssystem 18 erfasste Prozessparameter einen Sollwert unter- oder überschreitet, wobei als Sollwert in dem hier beschriebenen Ausführungsbeispiel der Mittelwert der während der Erzeugung des Analysebauteils gemessenen Prozessparameterwerte herangezogen wird.

Das in dem hier beschriebenen Ausführungsbeispiel in Form eines optischen Tomografiesystems ausgebildete Prozessüberwachungssystem 18 erfasst als den für das Auftreten von Bauteilfehlern charakteristischen Prozessparameter einen Prozessparameter, der für eine Temperatur eines mit Laserstrahlung bestrahlten Bereichs einer Rohstoffpulverschicht charakteristisch ist. Hierzu ist das optische Tomografiesystem mit einer hochauflösenden Kamera ausgestattet, die dazu in der Lage ist, die Emission von Strahlung und insbesondere eine Strahlungsintensität im nahen Infrarotbereich in dem mit Laserstrahlung bestrahlten Bereich der Rohstoffpulverschicht zu erfassen. Aus den gemessenen Strahlungsemissionen kann die Temperatur in der Bestrahlungszone, d. h. in dem mit Laserstrahlung bestrahlten Bereich der Rohstoffpulverschicht ermittelt werden.

Es hat sich gezeigt, dass die oben beschriebenen Störungen in dem durch die Prozesskammer 12 geleiteten Gasstrom dazu führen, dass in dem mit Laserstrahlung bestrahlten Bereich der Rohstoffpulverschicht eine erhöhte Temperatur auftritt. Abweichungen der Temperatur von der Solltemperatur und insbesondere oberhalb der Solltemperatur liegende Temperaturen können daher als Indiz dafür gewertet werden, dass der Bereich der Bauplattform 10, in dem die erhöhte Temperatur gemessen wird, als defektanfälliger Bereich 20 der Bauplattform 10 einzustufen ist.

Nach der Identifikation des defektanfälligen Bereichs 20 der Bauplattform 10 wird in einem zweiten Bauprozess mindestens ein defektbehaftetes Probebauteil 22 durch Laser-Strahlschmelzen erzeugt, indem nacheinander eine Mehrzahl von Rohstoffpulverschichten auf die Bauplattform 10 aufgetragen und zumindest in dem defektanfälligen Bereich 20 der Bauplattform 10 in Abhängigkeit der gewünschten Geometrie des mindestens einen defektbehafteten Probebauteils ortsselektiv mit Laserstrahlung bestrahlt werden. Durch seinen Aufbau in dem defektanfälligen Bereich 20 der Bauplattform 10 ist mit einer erhöhten Wahrscheinlichkeit damit zu rechnen, dass in dem Probebauteil 22 ein Defekt auftritt, sodass das Probebauteil 22 anschließend dazu verwendet werden kann, den Einfluss dieses Defekts auf seine Eigenschaften und insbesondere seine mechanischen Eigenschaften zu untersuchen.

Bei der Erzeugung des defektbehafteten Probebauteils 22 werden in zumindest einem Teil der Rohstoffpulverschichten und vorzugsweise in allen Rohstoffpulverschichten auch mindestens 50 %, insbesondere mindestens 60 %, vorzugsweise mindestens 70 %, insbesondere bevorzugt mindestens 80 % und besonders bevorzugt mindestens 90 % der Fläche eines außerhalb des defektanfälligen Bereichs 20 der Bauplattform liegenden Bereichs der Bauplattform 10 ortsselektiv mit Laserstrahlung bestrahlt. Dadurch kann sichergestellt werden, dass beim Aufbau des mindestens einen defektbehafteten Probebauteils 22 ausreichend Schweißspratzer, Schweißrauchpartikel und Rußpartikel entstehen, die die gewünschten Defekte in dem Probebauteil 22 verursachen.

Aus dem defektbehafteten Probebauteil 22 kann durch spanende Fertigung, wie z.B. Fräsen oder Schleifen ein endgültiges Probebauteil erzeugt werden. Alternativ dazu ist es jedoch auch denkbar, dass das defektbehaftete Probebauteil 22 in Form eines Endkonturprobebauteils erzeugt wird, bei dem auf eine spanende Nachbearbeitung und/oder eine Oberflächennachbearbeitung verzichtet werden kann.

Ferner kann, wie in Figur 3 gezeigt ist, auch eine Mehrzahl von defektbehafteten Probebauteilen 22 erzeugt werden, die jeweils durch einen Spalt 24 voneinander getrennt sind sodass die defektbehafteten Probebauteile 22 einfach voneinander separiert werden können. Der Spalt zwischen zueinander benachbarten defektbehafteten Probebauteilen kann eine Breite von ca. 0,15 mm bis ca. 0,35 mm, insbesondere eine Breite von ca. 0,2 mm bis ca. 0,3 mm und vorzugsweise eine Breite von ca. 0,25 mm haben.

Neben den defektbehafteten Probebauteilen 22, die in dem defektanfälligen Bereich 20 der Bauplattform 10 aufgebaut wurden, sind in Figur 3 auch weitere Probebauteile 26 dargestellt, die in einem Bereich der Bauplattform 10 aufgebaut wurden, der nicht dem defektanfälligen Bereich 20 zuzurechnen ist. Es ist daher davon auszugehen, dass die weiteren Probebauteile 26 mit einer geringeren Wahrscheinlichkeit Bauteildefekte aufweisen als die defektbehafteten Probebauteile 22. Die weiteren Probebauteile 26 können dann beispielsweise als Vergleichsproben herangezogen werden.

## Patentansprüche

1. Verfahren zur Erzeugung eines defektbehafteten Probebauteils (22) durch Laser-Strahlschmelzen, bei dem
i) in einem ersten Bauprozess ein Analysebauteil durch Laser-Strahlschmelzen erzeugt wird, indem nacheinander eine Mehrzahl von Rohstoffpulverschichten auf eine Bauplattform (10) aufgetragen und in Abhängigkeit der gewünschten Geometrie des Analysebauteils ortsselektiv mit Laserstrahlung bestrahlt werden;
ii) während der Erzeugung des Analysebauteils mittels eines Prozessüberwachungssystems (18) mindestens ein Prozessparameter erfasst wird, der für das Auftreten von Bauteildefekten charakteristisch ist;
iii) anhand des Ergebnisses der Erfassung des Prozessparameters ein defektanfälliger Bereich (20) der Bauplattform (10) identifiziert wird, in dem ein gehäuftes Auftreten von Bauteildefekten zu erwarten ist; und
iv) in einem zweiten Bauprozess mindestens ein defektbehaftetes Probebauteil (22) durch Laser-Strahlschmelzen erzeugt wird, indem nacheinander eine Mehrzahl von Rohstoffpulverschichten auf die Bauplattform (10) aufgetragen und zumindest in dem defektanfälligen Bereich (20) der Bauplattform (10) in Abhängigkeit der gewünschten Geometrie des mindestens einen defektbehafteten Probebauteils (22) ortsselektiv mit Laserstrahlung bestrahlt werden.

2. Verfahren nach Anspruch 1,
wobei das Prozessüberwachungssystem (18) den mindestens einen Prozessparameter in Abhängigkeit eines Orts in dem Analysebauteil erfasst.

3. Verfahren nach Anspruch 2,
wobei zur Identifikation des defektanfälligen Bereichs (20) der Bauplattform (10) in Abhängigkeit eines Orts in dem Analysebauteil erfasste Werte des Prozessparameters in eine einer Oberfläche der Bauplattform (10) entsprechende Ebene projiziert werden.

4. Verfahren nach einem der Ansprüche 1 bis 3,
wobei ein Bereich der Bauplattform (10) als defektanfälliger Bereich (20) der Bauplattform (10) identifiziert wird, wenn bei einer Bestrahlung dieses Bereichs der Bauplattform (10) mit Laserstrahlung der von dem Prozessüberwachungssystem (18) erfasste Prozessparameter einen Sollwert unter- oder überschreitet.

5. Verfahren nach Anspruch 4,
wobei als Sollwert des Prozessparameters ein Mittelwert des Prozessparameters herangezogen wird, der sich durch Mittelung der bei der Erzeugung des Analysebauteils mithilfe des Prozessüberwachungssystems (18) erfassten Werte des Prozessparameters ergibt.

6. Verfahren nach einem der Ansprüche 1 bis 5,
wobei bei der Erzeugung des Analysebauteils in zumindest einem Teil der Rohstoffpulverschichten mindestens 50 %, insbesondere mindestens 60 %, vorzugsweise mindestens 70 %, insbesondere bevorzugt mindestens 80 % und besonders bevorzugt mindestens 90 % der Fläche der Bauplattform (10) ortsselektiv mit Laserstrahlung bestrahlt werden.

7. Verfahren nach einem der Ansprüche 1 bis 6,
wobei als der für das Auftreten von Bauteilfehlern charakteristische Prozessparameter ein Prozessparameter erfasst wird, der für eine Temperatur eines mit Laserstrahlung bestrahlten Bereichs einer Rohstoffpulverschicht charakteristisch ist.

8. Verfahren nach Anspruch 7,
wobei die Erfassung des für eine Temperatur eines mit Laserstrahlung bestrahlten Bereichs einer Rohstoffpulverschicht charakteristischen Prozessparameters anhand der Erfassung einer Emission von Infrarotstrahlung in dem mit Laserstrahlung bestrahlten Bereich der Rohstoffpulverschicht erfolgt.

9. Verfahren nach einem der Ansprüche 1 bis 8,
wobei als Prozessüberwachungssystem (18) zur Erfassung des für das Auftreten von Bauteilfehlern charakteristischen Prozessparameters ein optisches Tomographiesystem zum Einsatz kommt.

10. Verfahren nach einem der Ansprüche 1 bis 9,
wobei bei der Erzeugung des defektbehafteten Probebauteils (22) in dem defektanfälligen Bereich (20) der Bauplattform (10) in zumindest einem Teil der Rohstoffpulverschichten mindestens 50 %, insbesondere mindestens 60 %, vorzugsweise mindestens 70 %, insbesondere bevorzugt mindestens 80 % und besonders bevorzugt mindestens 90 % der Fläche eines außerhalb des defektanfälligen Bereichs (20) der Bauplattform (10) liegenden Bereichs der Bauplattform (10) ortsselektiv mit Laserstrahlung bestrahlt werden.

11. Verfahren nach einem der Ansprüche 1 bis 10,
wobei aus dem mindestens einen defektbehafteten Probebauteil (22) durch spanende Fertigung ein endgültiges Probebauteil erzeugt wird.

12. Verfahren nach einem der Ansprüche 1 bis 10,
wobei das mindestens eine defekt behaftete Probebauteil (22) in Form eines Endkonturprobebauteils erzeugt wird, das keine Oberflächennachbearbeitung erfordert.

13. Verfahren nach einem der Ansprüche 1 bis 12,
wobei in dem defektanfälligen Bereich (20) der Bauplattform (10) eine Mehrzahl von defektbehafteten Probebauteilen (22) erzeugt werden, die durch einen Spalt (24) voneinander getrennt sind.

14. Verfahren nach Anspruch 13,
wobei der Spalt zwischen zueinander benachbarten defektbehafteten Probebauteilen (22) eine Breite von ca. 0,15 mm bis ca. 0,35 mm, insbesondere eine Breite von ca. 0,2 mm bis ca. 0,3 mm und vorzugsweise eine Breite von ca. 0,25 mm hat.

## Claims

1. A method for producing a defective test component (22) by laser beam melting, wherein
i) in a first building process, an analysis component is produced by laser beam melting by successively applying a plurality of raw material powder layers to a building platform (10) and irradiating them site-selectively with laser radiation in dependence on the desired geometry of the analysis component;
ii) during the production of the analysis component, at least one process parameter which is characteristic of the occurrence of component defects is detected by means of a process monitoring system (18);
iii) a defect-prone region (20) of the building platform (10) in which an increased occurrence of component defects is to be expected is identified on the basis of the result of the detection of the process parameter; and
iv) in a second building process, at least one defective test component (22) is produced by laser beam melting by successively applying a plurality of raw material powder layers to the building platform (10) and irradiating them site-selectively with laser radiation at least in the defect-prone region (20) of the building platform (10) in dependence on the desired geometry of the at least one defective test component (22).

2. The method according to claim 1,
wherein the process monitoring system (18) detects the at least one process parameter in dependence on a location in the analysis component.

3. The method according to claim 2,
wherein, for identifying the defect-prone region (20) of the building platform (10), values of the process parameter detected in dependence on a location in the analysis component, are projected into a plane corresponding to a surface of the building platform (10).

4. The method according to any one of claims 1 to 3,
wherein a region of the building platform (10) is identified as a defect-prone region (20) of the building platform (10) if, upon irradiation said region of the building platform (10) with laser radiation, the process parameter detected by the process monitoring system (18) falls below or exceeds a set value.

5. The method according to claim 4,
wherein an average value of the process parameter, which is obtained by averaging the values of the process parameter detected during the production of the analysis component with the aid of the process monitoring system (18), is used as the set value of the process parameter.

6. The method according to any one of claims 1 to 5,
wherein upon the production of the analysis component, in at least some of the raw material powder layers, at least 50%, in particular at least 60%, preferably at least 70%, more preferably at least 80% and particularly preferably at least 90% of the area of the building platform (10) is irradiated site-selectively with laser radiation.

7. The method according to any one of claims 1 to 6,
wherein the process parameter which is characteristic for the occurrence of component defects is a process parameter which is characteristic for a temperature of an region of a raw material powder layer which is irradiated with laser radiation.

8. The method according to claim 7,
wherein the detection of the process parameter characteristic of a temperature of a region of a raw material powder layer which irradiated with laser radiation is carried out on the basis of the detection of an emission of infrared radiation in the region of the raw material powder layer which is irradiated with laser radiation.

9. The method according to any one of claims 1 to 8,
wherein an optical tomography system is used as the process monitoring system (18) for detecting the process parameter which is characteristic for the occurrence of component defects.

10. The method according to any one of claims 1 to 9,
wherein upon the production of the defective test component (22) in the defect-prone region (20) of the building platform (10), in at least some of the raw material powder layers, at least 50%, in particular at least 60%, preferably at least 70%, more preferably at least 80% and particularly preferably at least 90% of the area of a region of the building platform (10) lying outside the defect-prone region (20) of the building platform (10) is irradiated site-selectively with laser radiation.

11. The method according to any one of claims 1 to 10,
wherein a final test component is produced from the at least one defective test component (22) by machining.

12. The method according to any one of claims 1 to 10,
wherein the at least one defective test component (22) is produced in the form of a final contour test component that does not require surface finishing.

13. The method according to any one of claims 1 to 12,
wherein in the defect-prone region (20) of the building platform (10), a plurality of defective test components (22) are produced, which are separated from each other by a gap (24).

14. The method according to claim 13,
wherein the gap between mutually adjacent defective test components (22) has a width of approximately 0.15 mm to approximately 0.35 mm, in particular a width of approximately 0.2 mm to approximately 0.3 mm and preferably a width of approximately 0.25 mm.

## Revendications

1. Procédé de fabrication d'un composant échantillon (22) présentant des défauts par fusion par faisceau laser, dans lequel
i) dans un premier processus de construction, un composant d'analyse est produit par fusion par faisceau laser, par application successive d'une pluralité de couches de poudre de matière première sur une plate-forme de construction (10) et par exposition sélective de ces dernières au rayonnement laser en fonction de la géométrie souhaitée du composant d'analyse;
ii) pendant la production du composant d'analyse, au moyen d'un système de surveillance de processus (18) est enregistré au moins un paramètre de processus qui est caractéristique de l'apparition de défauts du composant échantillon;
iii) à l'aide du résultat de l'enregistrement du paramètre de processus, est identifiée une zone (20) de la plate-forme de construction (10) susceptibles de présenter des défauts, du fait qu'on peut s'attendre à une apparition fréquente de défauts de composants; et
iv) dans un deuxième processus de construction, au moins un composant échantillon (22) présentant des défauts est produit par fusion au laser par rayonnement, par application successive d'un nombre multiple de couches de poudre de matière première sur la plate-forme de construction (10) et par exposition sélective de ces dernières au rayonnement laser au moins dans la zone (20) de la plate-forme de construction (10) susceptible de présenter des défauts, en fonction de la géométrie souhaitée du au moins un composant échantillon (22) présentant des défauts.

2. Procédé selon la revendication 1,
dans lequel le système de surveillance de processus (18) détecte l'au moins un paramètre de processus en fonction d'un emplacement dans le composant d'analyse.

3. Procédé selon la revendication 2,
dans lequel, pour identifier la zone (20) de la plate-forme de construction (10) susceptible de présenter des défauts, sont projetées, en fonction d'un emplacement dans le composant d'analyse, des valeurs détectées du paramètre de processus dans un plan correspondant à une surface de la plate-forme de construction (10).

4. Procédé selon l'une des revendications 1 à 3,
dans lequel une zone de la plate-forme de construction (10) est identifiée comme étant une zone (20) de la plate-forme de construction (10) susceptible de présenter des défauts si, lorsque cette zone de la plate-forme de construction (10) est soumise à un rayonnement laser, le paramètre de processus détecté par le système de surveillance de processus (18) est inférieur ou supérieur à une valeur de consigne.

5. Procédé selon la revendication 4,
dans lequel on utilise comme valeur de consigne du paramètre de processus une valeur moyenne du paramètre de processus que l'on obtient en faisant la moyenne des valeurs du paramètre de processus entrées lors de la production du composant d'analyse à l'aide du système de surveillance de processus (18).

6. Procédé selon l'une des revendications 1 à 5,
dans lequel, lors de la production du composant d'analyse, au moins 50 %, en particulier au moins 60 %, de préférence au moins 70 %, en particulier de préférence au moins 80 % et de manière particulièrement préférée au moins 90 % de la surface de la plate-forme de construction (10) sont soumis sélectivement à un rayonnement laser dans au moins une partie des couches de poudre de matière première.

7. Procédé selon l'une des revendications 1 à 6,
dans lequel on enregistre comme paramètre de processus caractéristique de l'apparition de défauts de composants un paramètre de processus qui est caractéristique d'une température d'une zone d'une couche de poudre de matière première soumise à un rayonnement laser.

8. Procédé selon la revendication 7,
dans lequel la détection du paramètre de processus caractéristique d'une température d'une zone soumise au laser d'une couche de poudre de matière première s'effectue à l'aide de la détection d'une émission de rayonnement infrarouge dans la zone soumise au laser de la couche de poudre de matière première.

9. Procédé selon l'une des revendications 1 à 8,
dans lequel un système optique de tomographie est utilisé comme système de surveillance de processus (18) pour l'enregistrement du paramètre de processus caractéristique de l'apparition de défauts de composants.

10. Procédé selon l'une des revendications 1 à 9,
dans lequel, lors de la production du composant échantillon (22) présentant des défauts dans la zone (20) de la plate-forme de construction (10) susceptible de présenter des défauts, au moins 50 %, en particulier au moins 60 %, de préférence au moins 70 %, de manière particulièrement préférée au moins 80 % et de manière particulièrement préférée au moins 90 % de la surface d'une zone de la forme de la plate-forme de construction (10) située en dehors de la zone (20) de la plate-forme de construction (10) susceptible de présenter des défauts sont soumises sélectivement à un rayonnement laser..

11. Procédé selon l'une des revendications 1 à 10,
dans lequel un composant échantillon final est produit par usinage par enlèvement de matière à partir de l'au moins un composant échantillon (22) présentant des défauts.

12. Procédé selon l'une quelconque des revendications 1 à 10,
dans lequel ledit au moins un composant échantillon (22) présentant des défauts est produit sous la forme d'un composant échantillon de contour final ne nécessitant pas de finition de surface.

13. Procédé selon l'une des revendications 1 à 12,
dans lequel, dans la zone (20) de la plate-forme de construction (10) susceptible de présenter des défauts, est produite une pluralité de composants échantillons (22) présentant des défauts, qui sont séparés les uns des autres par une fente (24).

14. Procédé selon la revendication 13,
dans lequel la fente entre des composants échantillons (22) adjacents présentant des défauts présente une largeur d'environ 0,15 mm à environ 0,35 mm, en particulier une largeur d'environ 0,2 mm à environ 0,3 mm et de préférence une largeur d'environ 0,25 mm.
